# EUROPEAN PATENT APPLICATION

(11) **EP 4 769 438 A1**
(43) Date of publication of application: **01.07.2026**
(21) Application number: 24954147.5
(22) Date of filing: 14.09.2024
(51) Int. Cl.: G21C 17/01, G21C 17/013

(54) **ULTRASONIC SCANNING DEVICE FOR REACTOR PRESSURE VESSEL**

(71) Applicant: CGN Inspection Technology Co., Ltd., Shenzhen, Guangdong 518000 (CN); Suzhou Nuclear Power Research Institute Co., Ltd, Suzhou, Jiangsu 215004 (CN)
(72) Inventor: WANG, Tao, Shenzhen, Guangdong 518000 (CN); LIU, Chao, Shenzhen, Guangdong 518000 (CN); LI, Jie, Shenzhen, Guangdong 518000 (CN); CHEN, Huaidong, Shenzhen, Guangdong 518000 (CN); ZHU, Chuanyu, Shenzhen, Guangdong 518000 (CN); GUO, Wanglei, Shenzhen, Guangdong 518000 (CN); ZHANG, Yang, Shenzhen, Guangdong 518000 (CN); YE, Xin, Shenzhen, Guangdong 518000 (CN); XU, Junlong, Shenzhen, Guangdong 518000 (CN); CHEN, Yang, Shenzhen, Guangdong 518000 (CN); LU, Zili, Shenzhen, Guangdong 518000 (CN); SUN, Jiawei, Shenzhen, Guangdong 518000 (CN); MA, Guanbing, Shenzhen, Guangdong 518000 (CN); XIAO, Xuezhu, Shenzhen, Guangdong 518000 (CN); LIN, Ge, Shenzhen, Guangdong 518000 (CN)
(74) Representative: Westphal, Mussgnug & Partner, Patentanwälte mbB
(86) International application number: PCT/CN2024/119233
(87) International publication number: WO 2026/055997

(57) **Abstract**

An ultrasonic scanning device for a reactor pressure vessel, comprising a positioning unit and an ultrasonic scanning unit (3). The positioning unit comprises a guide rail (20). The ultrasonic scanning unit (3) comprises a first base (30) and three ultrasonic scanning assemblies (31, 32, 33) integrated on the first base. The three ultrasonic scanning assemblies (31, 32, 33) respectively perform ultrasonic scanning at three positions: a nozzle safe-end weld (121), the nozzle side of a nozzle-to-shell connecting weld (122), and an inner radius region (123). The first base (30) is connected to the guide rail (20) and is movable back and forth relative to the guide rail (20) in the direction of extension of the guide rail (20). The guide rail (20) is rotatable about the central axis of the direction of extension thereof. The three ultrasonic scanning assemblies (31, 32, 33) move back and forth together with the first base (30) along the guide rail (20) to reach corresponding working positions, and rotate circumferentially along with the guide rail (20) to perform comprehensive scanning at the corresponding working positions, thereby improving the level of integration of the device. In addition, a calibration specimen (40) is disposed on a first positioning assembly (21), such that ultrasonic probe calibration for the three ultrasonic scanning assemblies (31, 32, 33) can all be performed underwater without the need for above-water calibration, thereby improving work efficiency.

## Description

### TECHNICAL FIELD

The present invention relates to the field of nondestructive testing technology for reactor pressure vessels, and more particularly to an ultrasonic scanning device for reactor pressure vessel.

### THE RELATED ART

In the nondestructive testing work on the nozzle(s) of a reactor pressure vessel, inspection of three locations requires attention: the welded seam of nozzle safe-end, the welded seam of nozzle-to-shell (i.e. welded seam connecting the nozzle and the shell), and the inner radius region. However, currently, these three corresponding inspections generally require more than two pieces of devices to complete. The multiple pieces of devices need to operate sequentially and require water-out calibration, leading to relatively long times of in-service inspection for the reactor pressure vessel. There is still room for improvement in work efficiency.

### SUMMARY OF THE INVENTION

The technical problem that the present invention is made to overcome is to provide an ultrasonic scanning device for reactor pressure vessel.

A technical solution that the present invention adopts to overcome the technical problem is: providing an ultrasonic scanning device for reactor pressure vessel, characterized by comprising a positioning unit and an ultrasonic scanning unit;
the positioning unit comprises a guide rail configured to extend at least partially into the interior of a nozzle of a reactor pressure vessel;
the ultrasonic scanning unit comprises a first base body, first ultrasonic scanning assembly for scanning a nozzle safe-end welded seam, second ultrasonic scanning assembly for scanning a nozzle-to-shell connecting welded seam, and third ultrasonic scanning assembly for scanning an inner radius region; the first ultrasonic scanning assembly, the second ultrasonic scanning assembly, and the third ultrasonic scanning assembly are respectively disposed on the first base body;
the first base body is connected to the guide rail and is movable back and forth relative to the guide rail along an extending direction of the guide rail; and the guide rail is rotatable about a central axis along its extending direction.

In some embodiments, the first base body comprises a first base plate and a second base plate spaced apart from each other, and a third base plate connected between the first base plate and the second base plate, the third base plate encloses to form a hollow first cavity, the first cavity penetrates through the first base plate and the second base plate, and the guide rail passes through the first cavity;
the first ultrasonic scanning assembly comprises a first bracket and a first ultrasonic probe connected to the first bracket, the first bracket being connected to the first base plate; the second ultrasonic scanning assembly comprises a second bracket and a second ultrasonic probe connected to the second bracket, the second bracket being connected to the third base plate; and the third ultrasonic scanning assembly comprises a third bracket and a third ultrasonic probe connected to the third bracket, the third bracket being connected to the first base plate and the second base plate, respectively.

In some embodiments, the first bracket comprises a first air cylinder connected to the first base plate, the first air cylinder being drivingly connected to the first ultrasonic probe, the first ultrasonic probe is movable back and forth between a first extended position and a first retracted position under the drive of the first air cylinder, the first ultrasonic probe is closer to the first base plate when in the first retracted position than when in the first extended position; and/or
the second bracket comprises a second air cylinder connected to the third base plate, the second air cylinder being drivingly connected to the second ultrasonic probe, the second ultrasonic probe is movable back and forth between a second extended position and a second retracted position under the drive of the second air cylinder, the second ultrasonic probe is closer to the third base plate when in the second retracted position than when in the second extended position; and/or
the third bracket comprises a third air cylinder, a support rod, a rotating shaft, and a rotating shaft seat; a fixed end of the third air cylinder is connected to the second base plate, an output end of the third air cylinder is connected to a first end of the support rod, a second end of the support rod is connected to the third ultrasonic probe, the rotating shaft seat is connected to the first base plate, the rotating shaft is connected to the rotating shaft seat, and the rotating shaft is rotatably connected to a position between the first end and the second end of the support rod.

In some embodiments, the ultrasonic scanning unit further comprises a first drive motor disposed on the third base plate, and a gear drivingly connected to an output shaft of the first drive motor;
wherein the guide rail is provided with a gear rack extending along the extending direction of the guide rail, and the gear meshes with the gear rack.

In some embodiments, the positioning unit further comprises a first positioning assembly for positioning on an inner circumferential surface of a shell of the reactor pressure vessel and a second positioning assembly for positioning on an inner circumferential surface of the nozzle, the first positioning assembly and the second positioning assembly are respectively connected to two ends of the guide rail.

In some embodiments, the ultrasonic scanning device for reactor pressure vessel further comprises a calibration block, and the calibration block is disposed on the first positioning assembly.

In some embodiments, the first positioning assembly comprises a second base body and a second drive motor, the second drive motor is disposed within an enclosed second cavity formed by the second base body, and an output shaft of the second drive motor is drivingly connected to the guide rail.

In some embodiments, the first positioning assembly further comprises support arms and underwater suction cups for adsorbing to the inner circumferential surface of the shell, the support arms is connected to the second base body, and the underwater suction cups is connected to an end of the support arms away from the second base body; and/or
the first positioning assembly further comprises an underwater thruster connected to the second base body.

In some embodiments, the first positioning assembly further comprises a thrust stop trigger, the thrust stop trigger is connected to the end of the support arm away from the second base body and is located at one side of the underwater suction cup.

In some embodiments, the second positioning assembly comprises a third base body, a drive mechanism, and a support member, the third base body is connected to a second end of the guide rail, and the drive mechanism is disposed on the third base body;
the drive mechanism is drivingly connected to the support member to drive the support member to move back and forth between a fourth extended position and a fourth retracted position, the support member is closer to the third base body when in the fourth retracted position than when in the fourth extended position, and the support member abuts against the inner circumferential surface of the nozzle when in the fourth extended position.

In some embodiments, the third base body is provided with a plurality of balls, and the balls are configured to be in rolling contact with the inner circumferential surface of the nozzle.

The present invention has at least the following beneficial effects: The ultrasonic scanning device for reactor pressure vessel according to the present invention uses three ultrasonic scanning assemblies to respectively complete the ultrasonic scanning work at the three locations: the nozzle safe-end welded seam, the nozzle-to-shell connecting welded seam, and the inner radius region. The three ultrasonic scanning assemblies are integrated on the first base body, capable of moving back and forth relative to the guide rail along the extending direction of the guide rail together with the first base body to reach corresponding working positions, and rotating circumferentially with the guide rail about the central axis of the guide rail to perform comprehensive scanning at the corresponding working positions. Thereby, the integration level of the device is improved, allowing a single device to complete ultrasonic scanning at all three locations, shortening the in-service inspection time of the reactor pressure vessel, and correspondingly enhancing work efficiency.

### BRIEF DESCRIPTION OF THE DRAWINGS

For a clearer understanding of the technical solutions of the present invention, embodiments of the present invention will be described in detail below with reference to the accompanying drawings, in the drawings:
Figure 1 is a perspective schematic diagram of a reactor pressure vessel according to some embodiments;
Figure 2 is a partial schematic diagram of the reactor pressure vessel shown in Figure 1 from another viewing angle;
Figure 3 is a perspective schematic diagram of an ultrasonic scanning device for reactor pressure vessel according to some embodiments of the present invention;
Figure 4 is a perspective schematic diagram of an ultrasonic scanning unit of the ultrasonic scanning device for reactor pressure vessel shown in Figure 3;
Figure 5 is a schematic diagram of the ultrasonic scanning unit shown in Figure 4 from another viewing angle;
Figure 6 is a schematic diagram of a second ultrasonic scanning assembly of the ultrasonic scanning unit shown in Figure 4;
Figure 7 is a schematic diagram of a third ultrasonic scanning assembly of the ultrasonic scanning unit shown in Figure 4;
Figure 8 is a schematic diagram of a first drive motor of the ultrasonic scanning unit shown in Figure 4;
Figure 9 is a schematic diagram of a first positioning assembly of the ultrasonic scanning device for reactor pressure vessel shown in Figure 3;
Figure 10 is a longitudinal cross-sectional schematic diagram of the first positioning assembly shown in Figure 9;
Figure 11 is a schematic diagram of a second positioning assembly of the ultrasonic scanning device for reactor pressure vessel shown in Figure 3;
Figure 12 is an exploded schematic diagram of the second positioning assembly shown in Figure 11;
Figure 13 is a schematic diagram of the ultrasonic scanning unit shown in Figure 5 from another viewing angle.

### DETAILED DESCRIPTION OF THE EMBODIMENTS

For a clearer understanding of the technical features, objectives, and effects of the present invention, specific embodiments of the present invention will now be described in detail with reference to the accompanying drawings.

When an element is referred to as being "on" or "under" another element, it may be located directly or indirectly on the other element, or one or more intervening elements may be present. The terms "first", "second", "third", etc., are used merely for convenience in describing the technical solutions and should not be construed as indicating or implying relative importance or implicitly specifying the number of indicated technical features.

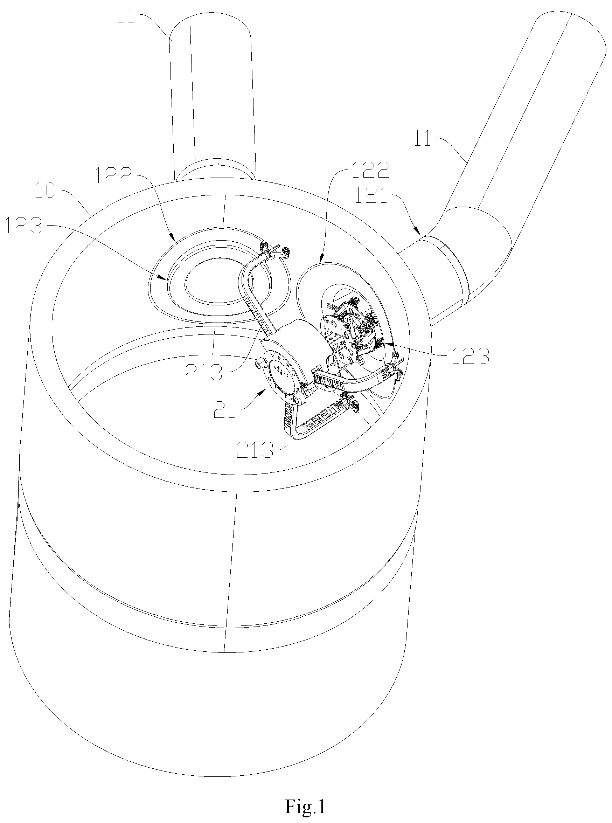

As shown in Figure 1, the reactor pressure vessel comprises a shell 10 and a plurality of nozzles 11. One end of each nozzle 11 is connected to the shell 10 and is in communication with an enclosed internal space formed by the shell 10. Depending on their function, the nozzles 11 can be categorized as outlet nozzle and inlet nozzle. In some embodiments, the number of nozzles 11 is six, comprising three inlet nozzles and three outlet nozzles. The reactor pressure vessel during service located in an underwater environment. When performing ultrasonic scanning inspection on this reactor pressure vessel, three locations require attention: the nozzle safe-end welded seam 121, the nozzle-to-shell connecting welded seam 122 (a welding location between the nozzle 11 and the shell 10), and the inner radius region 123 (a junction between the inner circumferential surface and the end face of the nozzle 11).

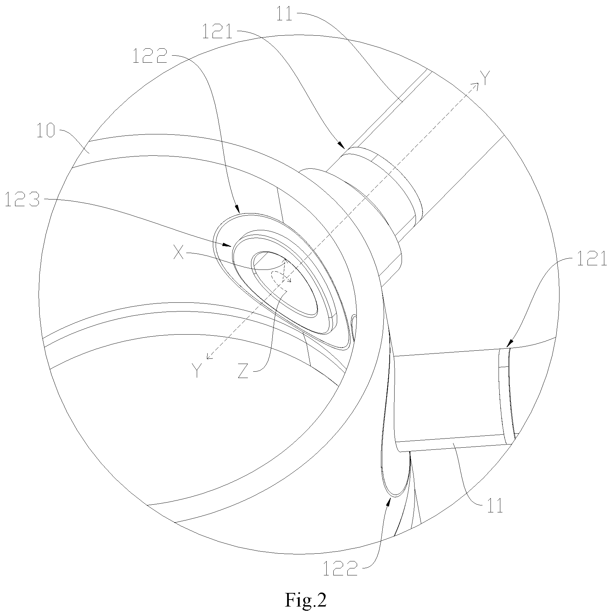

As shown in Figure 2, for ease of description, the direction Y along the central axis of the nozzle 11 is defined as the "axial direction", the direction Z circumferentially around Y is defined as the "circumferential direction", and the direction X perpendicular to Y is defined as the "radial direction".

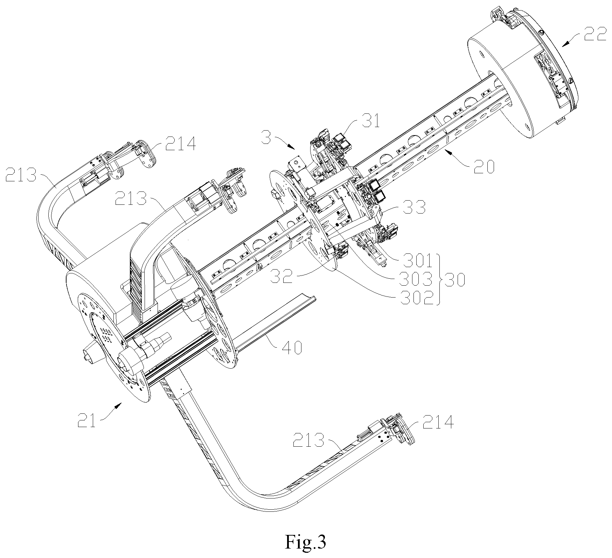

Referring to Figure 3, the present invention shows an embodiment of an ultrasonic scanning device for reactor pressure vessel, which comprises a positioning unit and an ultrasonic scanning unit 3. The positioning unit includes at least a guide rail 20. This guide rail 20 is configured to at least partially extend into the interior of a nozzle 11 of the reactor pressure vessel and serves as a base for the axial movement of the ultrasonic scanning unit 3 along the nozzle 11. That is, the guide rail 20 may entirely extend into the interior of the nozzle 11; alternatively, the guide rail 20 may partially extend into the interior of the nozzle 11, with another portion located outside the nozzle 11 and inside the shell 10.

The ultrasonic scanning unit 3 comprises a first base body 30, first ultrasonic scanning assembly 31, second ultrasonic scanning assembly 32, and third ultrasonic scanning assembly 33. The first ultrasonic scanning assembly 31, the second ultrasonic scanning assembly 32, and the third ultrasonic scanning assembly 33 are respectively arranged on the first base body 30. Among them, the first ultrasonic scanning assembly 31 is configured to scan the nozzle safe-end welded seam 121. The second ultrasonic scanning assembly 32 is configured to scan the nozzle-to-shell connecting welded seam 122. The third ultrasonic scanning assembly 33 is configured to scan the inner radius region 123. The first base body 30 is connected to the guide rail 20 and can move back and forth relative to the guide rail 20 along an extending direction of the guide rail 20. Consequently, the first ultrasonic scanning assembly 31, the second ultrasonic scanning assembly 32, and the third ultrasonic scanning assembly 33 arranged on the first base body 30 can move back and forth relative to the guide rail 20 along the extending direction of the guide rail 20 together with the first base body 30, to reach any axial position inside or outside the nozzle 11. Moreover, the guide rail 20 can also rotate 360 degrees circumferentially about its central axis along its extending direction, thereby driving the ultrasonic scanning unit 3 to rotate circumferentially about the central axis of the guide rail 20. Thus, the first ultrasonic scanning assembly 31 and the second ultrasonic scanning assembly 32 can comprehensively scan the inner circumferential surface of the nozzle 11 to accurately identify defects, obtain ultrasonic images, etc. The third ultrasonic scanning assembly 33 can comprehensively scan the inner radius region 123 on the inner circumferential surface of the shell 10 to accurately identify defects, obtain ultrasonic images, etc.

Specifically, the working principle of the ultrasonic scanning assemblies utilizes the reflection and refraction of high-frequency sound waves when they encounter interfaces between different media during propagation. By receiving the reflected ultrasonic signals, the internal structure and defects of the medium can be analyzed. When scanning the nozzle safe-end welded seam 121, the first ultrasonic scanning assembly 31 is moved along the guide rail 20 into the nozzle 11 and to the vicinity of the nozzle safe-end welded seam 121, to obtain the ultrasonic image information corresponding to the nozzle safe-end welded seam 121 using the first ultrasonic scanning assembly 31. When scanning the nozzle-to-shell connecting welded seam 122, the second ultrasonic scanning assembly 32 is moved along the guide rail 20 into the nozzle 11 and to the nozzle side of the nozzle-to-shell connecting welded seam 122, to obtain the ultrasonic image information corresponding to the nozzle side of the nozzle-to-shell connecting welded seam 122 using the second ultrasonic scanning assembly 32. When scanning the inner radius region 123, the third ultrasonic scanning assembly 33 is moved along the guide rail 20 to the outside of the nozzle 11 and inside the shell 10, oriented towards the inner circumferential surface of the shell 10 and aligned with the vicinity of the inner radius region 123 for ultrasonic scanning, to obtain the ultrasonic image information corresponding to the inner radius region 123. That is, the first ultrasonic scanning assembly 31 completes the ultrasonic scanning of the nozzle safe-end welded seam 121 inside the nozzle 11; the second ultrasonic scanning assembly 32 also completes the ultrasonic scanning of the nozzle-to-shell connecting welded seam 122 inside the nozzle 11; while the third ultrasonic scanning assembly 33 completes the ultrasonic scanning of the inner radius region 123 outside the nozzle 11 and inside the shell 10.

In summary, the ultrasonic scanning device for reactor pressure vessel according to the present invention uses three ultrasonic scanning assemblies to respectively complete the ultrasonic scanning work at the three locations: the nozzle safe-end welded seam 121, the nozzle-to-shell connecting welded seam 122, and the inner radius region 123. The three ultrasonic scanning assemblies are integrated on the first base body 30, capable of moving back and forth relative to the guide rail 20 along the extending direction of the guide rail 20 together with the first base body 30 to reach corresponding working positions, and rotating circumferentially with the guide rail 20 about the central axis of the guide rail 20 to perform comprehensive scanning at the corresponding working positions. Thereby, the integration level of the device is improved, allowing a single device to complete ultrasonic scanning at all three locations, shortening the in-service inspection time of the reactor pressure vessel, and correspondingly enhancing work efficiency.

In some embodiments, a plurality of first ultrasonic scanning assemblies 31 may be provided, distributed circumferentially evenly on the first base body 30. The same applies to the second ultrasonic scanning assembly 32 and the third ultrasonic scanning assembly 33.

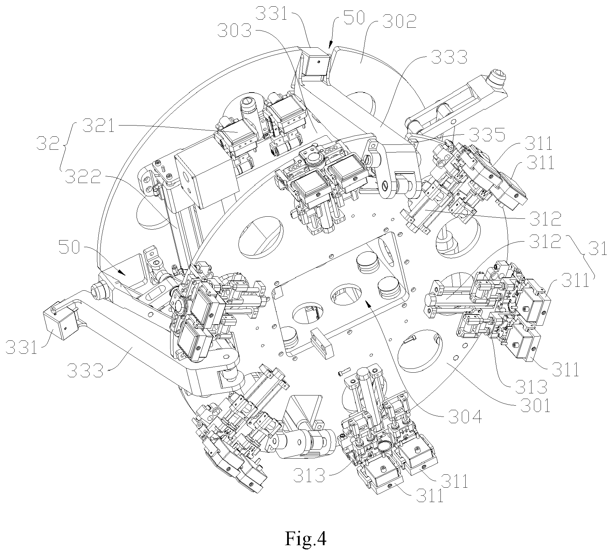

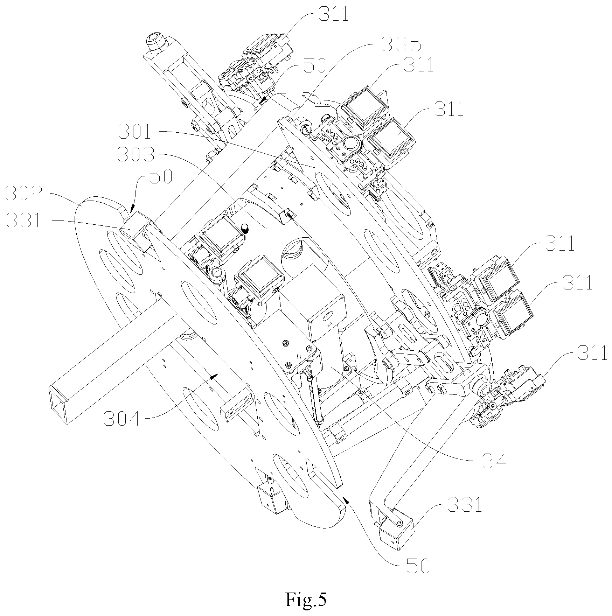

As shown in Figures 4 and 5, in some embodiments, the first base body 30 comprises a first base plate 301 and a second base plate 302 spaced apart from each other along axial direction, and a third base plate 303 connecting the first base plate 301 and the second base plate 302. The third base plate 303 encloses to form a hollow first cavity 304. The first cavity 304 penetrates the first base plate 301 and the second base plate 302, and the guide rail 20 extends through the first cavity 304. The first ultrasonic scanning assembly 31 comprises a first bracket and a first ultrasonic probe 311 connected to the first bracket, the first bracket is connected to the first base plate 301. The second ultrasonic scanning assembly 32 comprises a second bracket and a second ultrasonic probe 321 connected to the second bracket, the second bracket is connected to the third base plate 303. The third ultrasonic scanning assembly 33 comprises a third bracket and a third ultrasonic probe 331 connected to the third bracket, the third bracket is connected to both the first base plate 301 and the second base plate 302.

Specifically, the first bracket provides a support base and a basis for positional adjustment for the first ultrasonic probe 311. The first ultrasonic probe 311 can emit ultrasonic waves to the vicinity of the nozzle safe-end welded seam 121 and receive reflected ultrasonic waves. The reflected ultrasonic waves are converted into electrical signals, which, after amplification and processing, form an ultrasonic image. Similarly, the second bracket provides a support base and a basis for positional adjustment for the second ultrasonic probe 321. The second ultrasonic probe 321 can emit ultrasonic waves to the vicinity of the nozzle side of the nozzle-to-shell connecting welded seam 122 and receive reflected ultrasonic waves, which are converted into electrical signals to form an ultrasonic image. Similarly, the third bracket provides a support base and a basis for positional adjustment for the third ultrasonic probe 331. The third ultrasonic probe 331 can emit ultrasonic waves to the vicinity of the inner radius region 123 and receive reflected ultrasonic waves, which are converted into electrical signals to form an ultrasonic image.

As shown in Figures 4 and 5, in some embodiments, the first bracket comprises a first air cylinder 312 and a first transmission mechanism 313. The first air cylinder 312 is connected to the first base plate 301, and the first air cylinder 312 is drivingly connected to the first ultrasonic probe 311 via the first transmission mechanism 313. In other embodiments, the first transmission mechanism 313 can be omitted, and the output end of the first air cylinder 312 can be directly drivingly connected to the first ultrasonic probe 311. The first ultrasonic probe 311 is movable back and forth between a first extended position and a first retracted position under the drive of the first air cylinder 312. The first ultrasonic probe 311 is closer to the first base plate 301 when in the first retracted position compared to when in the first extended position. Specifically, the first air cylinder 312 can drive the first ultrasonic probe 311 radially away from the first base plate 301 to reach the first extended position, bringing the first ultrasonic probe 311 as close as possible to or into contact with the inner circumferential surface of the nozzle 11. The first air cylinder 312 can also drive the first ultrasonic probe 311 radially towards the first base plate 301 to retract the first ultrasonic probe 311. Therefore, when the first ultrasonic probe 311 is in the first retracted position, the ultrasonic scanning unit 3 can be moved along the guide rail 20 to position the first ultrasonic probe 311 near the nozzle safe-end welded seam 121. The first ultrasonic probe 311 is then driven to the first extended position by the first air cylinder 312 and rotates with the guide rail 20 to complete comprehensive scanning. After scanning, the first ultrasonic probe 311 is retracted to the first retracted position, thus not hindering the overall axial movement of the ultrasonic scanning unit 3.

As shown in Figures 4 to 6, in some embodiments, the second bracket comprises a second air cylinder 322. The second air cylinder 322 is connected to the third base plate 303 and is drivingly connected to the second ultrasonic probe 321. The second ultrasonic probe 321 is movable back and forth between a second extended position and a second retracted position under the drive of the second air cylinder 322. The second ultrasonic probe 321 is closer to the third base plate 303 when in the second retracted position compared to when in the second extended position. Specifically, the second air cylinder 322 can drive the second ultrasonic probe 321 radially away from the third base plate 303 to reach the second extended position, bringing the second ultrasonic probe 321 as close as possible to or into contact with the inner circumferential surface of the nozzle 11. The second air cylinder 322 can also drive the second ultrasonic probe 321 radially towards the third base plate 303 to retract the second ultrasonic probe 321. Therefore, when the second ultrasonic probe 321 is in the second retracted position, the ultrasonic scanning unit 3 can be moved along the guide rail 20 to position the second ultrasonic probe 321 near the nozzle-to-shell connecting welded seam 122. The second ultrasonic probe 321 is then driven to the second extended position by the second air cylinder 322 and rotates with the guide rail 20 to complete scanning. After scanning, the second ultrasonic probe 321 is retracted to the second retracted position, thus not hindering the overall axial movement of the ultrasonic scanning unit 3.

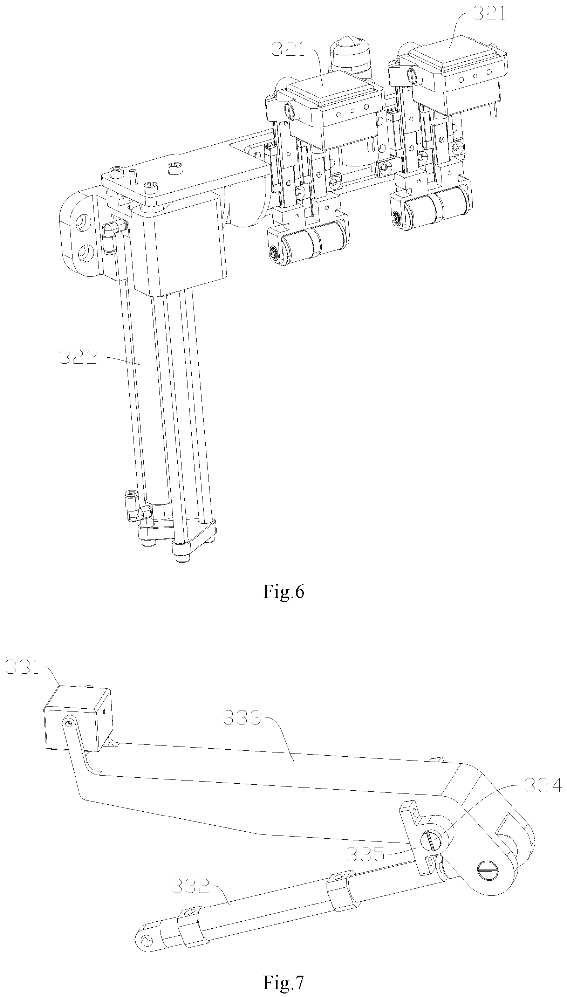

As shown in Figures 4, 5, and 7, in some embodiments, the third bracket comprises a third air cylinder 332, a support rod 333, a pivot shaft 334, and a rotating shaft seat 335. The fixed end of the third air cylinder 332 is connected to the second base plate 302. The output end of the third air cylinder 332 is connected to a first end of the support rod 333. A second end of the support rod 333 is connected to the third ultrasonic probe 331. The rotating shaft seat 335 is connected to the first base plate 301. The rotating shaft 334 is connected to the rotating shaft seat 335 and is rotatably connected to a position between the first end and the second end of the support rod 333. That is, the third air cylinder 332 is drivingly connected to the third ultrasonic probe 331. The third ultrasonic probe 331 is movable back and forth between a third extended position and a third retracted position under the drive of the third air cylinder 332. The third ultrasonic probe 331 is closer to the second base plate 302 when in the third retracted position compared to when in the third extended position. Specifically, taking the orientation shown in Figure 7 as a reference, the support rod 333 and the third air cylinder 332 together constitute a lever mechanism. When the output end of the third air cylinder 332 outputs force to push the first end of the support rod 333 forward (to the right), the support rod 333 rotates counterclockwise about the rotating shaft 334 (a fixed point), causing the second end of the support rod 333 where the third ultrasonic probe 331 is located to move downwards, bringing the third ultrasonic probe 331 gradually closer to the third air cylinder 332 until it reaches the third retracted position. When the output end of the third air cylinder 332 outputs force to pull the first end of the support rod 333 backward (to the left), the support rod 333 rotates clockwise about the rotating shaft 334, causing the second end of the support rod 333 where the third ultrasonic probe 331 is located to move upwards, moving the third ultrasonic probe 331 gradually away from the third air cylinder 332 until it reaches the third extended position. Therefore, when the third ultrasonic probe 331 is in the third retracted position, the ultrasonic scanning unit 3 can be moved along the guide rail 20 to position the third ultrasonic probe 331 outside the nozzle 11, inside the shell 10, and near the inner radius region 123. The third ultrasonic probe 331 is then driven to the third extended position by the third air cylinder 332, oriented towards the inner radius region 123 to emit ultrasonic waves perpendicular to the scanning surface, and rotates with the guide rail 20 to complete comprehensive scanning. After scanning, the third ultrasonic probe 331 is retracted to the third retracted position, thus not hindering the overall axial movement of the ultrasonic scanning unit 3.

As shown in Figures 4 and 5, in some embodiments, the first base plate 301 and the second base plate 302 are respectively provided with grooves 50. The groove 50 on the first base plate 301 and the groove 50 on the second base plate 302 are oppositely arranged. The rotating shaft seat 335 is connected to an edge region of the groove 50 on the first base plate 301. The rotating shaft 334 spans across the groove 50 on the first base plate 301. The first end of the support rod 333 is located within the groove 50 on the first base plate 301. When the third ultrasonic probe 331 is in the third retracted position, it is accommodated within the groove 50 on the second base plate 302.

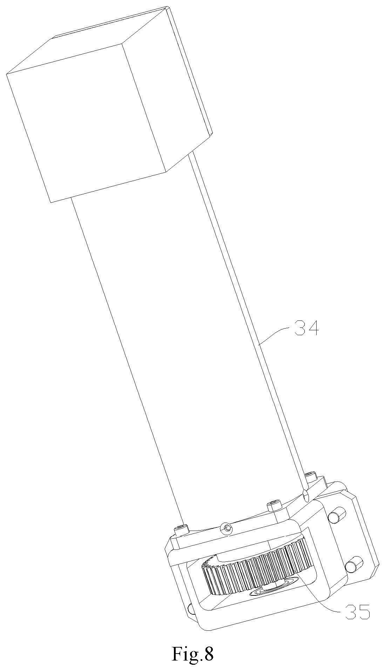

As shown in Figures 4, 5, and 8, in some embodiments, to achieve the back-and-forth movement of the ultrasonic scanning unit 3 relative to the guide rail 20 along the extending direction of the guide rail 20, the ultrasonic scanning unit 3 further comprises a first drive motor 34 arranged on the third base plate 303, and a gear 35 drivingly connected to an output shaft of the first drive motor 34. A gear rack (not shown) extending along the extending direction of the guide rail 20 is provided on the guide rail 20. The gear 35 meshes with the gear rack. Thus, the torque output from the first drive motor 34 is transmitted to the gear 35. When the gear 35 rotates, relative displacement occurs between the gear 35 and the gear rack, thereby driving the first base body 30, and the first ultrasonic scanning assembly 31, the second ultrasonic scanning assembly 32, and the third ultrasonic scanning assembly 33 arranged on the first base body 30, to move back and forth together relative to the guide rail 20 along the extending direction of the guide rail 20. Understandably, the aforementioned gear-and-rack transmission mechanism is primarily used to convert the rotary motion of the first drive motor 34 into linear motion. In other embodiments, besides the gear-and-rack transmission mechanism, other transmission forms can be used to convert the rotary motion of the first drive motor 34 into linear motion, such as a ball screw mechanism, a crank-slider mechanism, etc.

As shown in Figure 3, in some embodiments, the positioning unit further comprises a first positioning assembly 21 and a second positioning assembly 22 respectively connected to two ends of the guide rail 20. The first positioning assembly 21 is configured to be positioned on the inner circumferential surface of the shell 10 of the reactor pressure vessel. The second positioning assembly 22 is configured to be positioned on the inner circumferential surface of the nozzle 11. That is, during operation, the first positioning assembly 21 is located inside the shell 10 and outside the nozzle 11; the second positioning assembly 22 is located inside the nozzle 11. Through two-point positioning by the first positioning assembly 21 and the second positioning assembly 22 outside and inside the nozzle 11, the stability and reliability of the movement of the ultrasonic scanning unit 3 along the guide rail 20 and its rotation with the guide rail 20 are ensured.

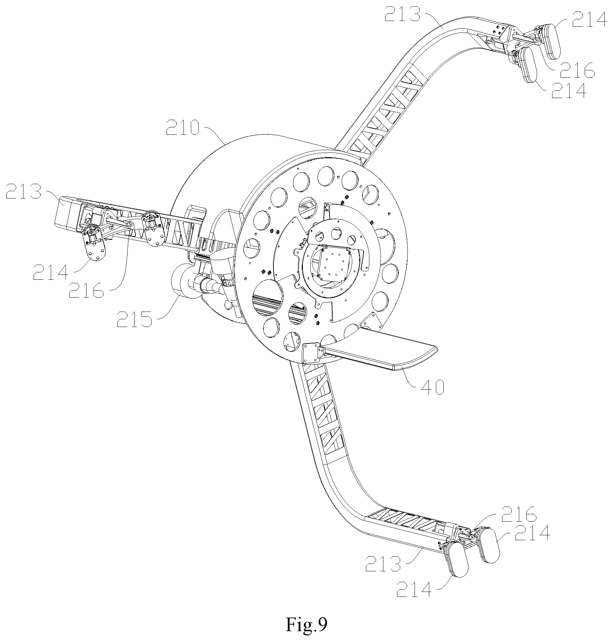

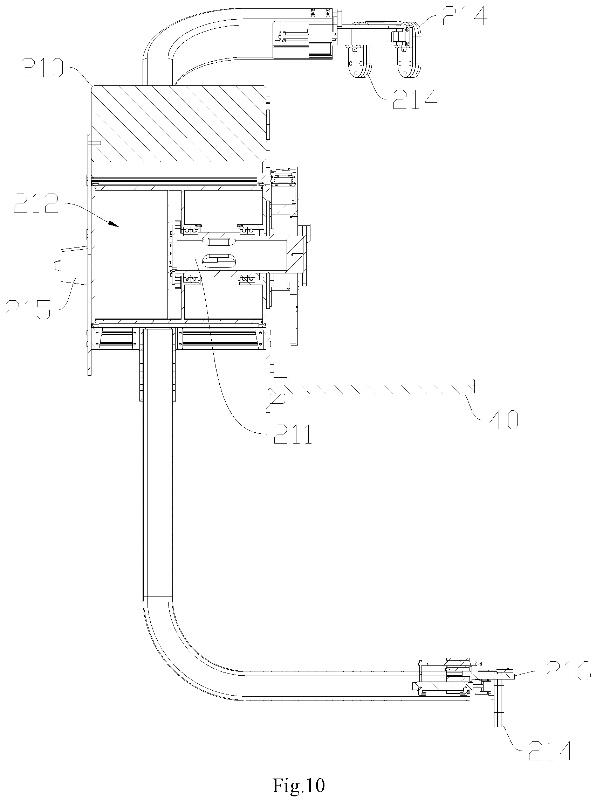

To achieve 360-degree circumferential rotation of the guide rail 20 about its central axis, as shown in Figures 3, 9, and 10, in some embodiments, the first positioning assembly 21 comprises a second base body 210 and a second drive motor 211. The second drive motor 211 is arranged within an enclosed second cavity 212 formed by the second base body 210. An output shaft of the second drive motor 211 is drivingly connected to the guide rail 20. Thus, the torque output from the second drive motor 211 is transmitted to the guide rail 20, thereby driving the circumferential rotation of the guide rail 20.

As shown in Figures 3, 9, and 10, in some embodiments, the first positioning assembly 21 further comprises support arms 213 and underwater suction cups 214 configured to adsorb onto the inner circumferential surface of the shell 10. The support arms 213 are connected to the second base body 210. The underwater suction cups 214 are connected to the end of the support arms 213 away from the second base body 210. Specifically, existing underwater suction cups 214 in the art come in various types and can be selected according to specific requirements. For example, the underwater suction cup 214 may be a vacuum underwater suction cup comprising an electric motor, a vacuum pump, and a suction cup. The electric motor drives the vacuum pump to evacuate air and water from the suction cup, creating negative pressure to adsorb to an object. Alternatively, the underwater suction cup 214 may be an underwater electric suction cup comprising a housing, a submersible motor, and an impeller arranged inside the housing. The submersible motor drives the impeller to rotate at high speed, generating a vortex whose core creates negative pressure, providing adhesion force for the first positioning assembly 21 through an electromechanical-hydraulic integrated device.

As shown in Figures 3, 9, and 10, in some embodiments, the first positioning assembly 21 further comprises an underwater thruster 215 connected to the second base body 210. This underwater thruster 215 is primarily used to provide self-propulsion for the overall ultrasonic scanning device for reactor pressure vessel. The underwater thruster 215 converts power into thrust to enable the overall movement of the ultrasonic scanning device for reactor pressure vessel in water. Specifically, existing underwater thrusters 215 in the art come in various types and can be selected according to specific requirements. For example, the underwater thruster 215 may be a propeller-type vector underwater thruster, generating thrust by rotating a propeller, which may be of fixed or variable pitch design to achieve different propulsion effects and maneuverability. Alternatively, the underwater thruster 215 may be a water-jet vector thruster, utilizing a propulsion pump rotating at high speed to generate a high-speed water flow, with the jet of water producing reactive force for propulsion.

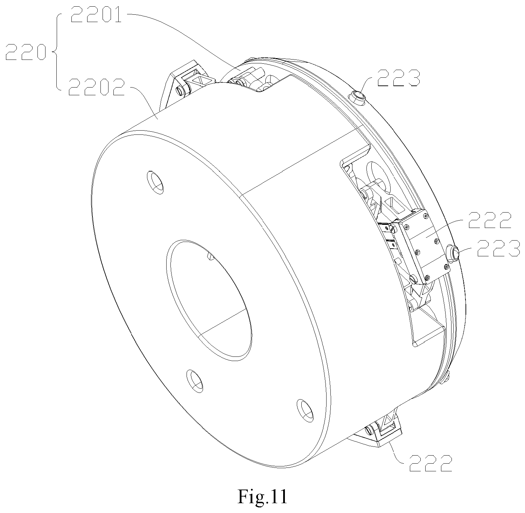

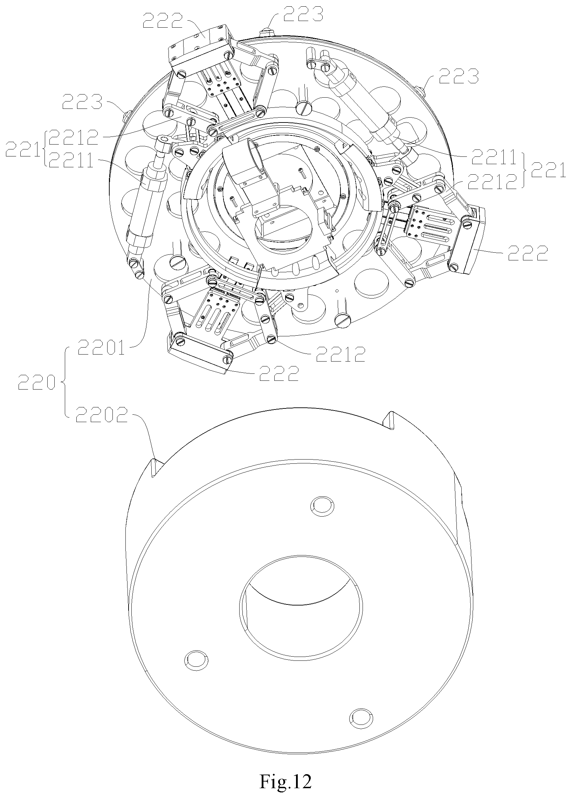

As shown in Figures 11 and 12, in some embodiments, the second positioning assembly 22 comprises a third base body 220, a drive mechanism 221, and a first support member 222. The third base body 220 is connected to a second end of the guide rail 20. The drive mechanism 221 is arranged on the third base body 220. The drive mechanism 221 is drivingly connected to the first support member 222 to drive the first support member 222 to move back and forth between a fourth extended position and a fourth retracted position. The first support member 222 is closer to the third base body 220 when in the fourth retracted position compared to when in the fourth extended position. The first support member 222 abuts against the inner circumferential surface of the nozzle 11 when in the fourth extended position. Specifically, the drive mechanism 221 may comprise a fourth air cylinder 2211 and a linkage mechanism 2212. The linkage mechanism 2212 is connected between the fourth air cylinder 2211 and the first support member 222. The fourth air cylinder 2211 drives the movement of the linkage mechanism 2212, causing the first support member 222 to move between the fourth extended position and the fourth retracted position. Furthermore, as shown in the embodiment of Figures 11 and 12, the third base body 220 comprises a first portion 2201 and a second portion 2202 connected to the first portion 2201. The drive mechanism 221 is arranged on the first portion 2201. The second portion 2202 is connected to the second end of the guide rail 20. The drive mechanism 221 and the first support member 222 are accommodated within a third cavity defined together by the first portion 2201 and the second portion 2202. The first support member 222 can extend out of or retract into the third cavity. The first support member 222 may be an elastic member or a ball capable of being in rolling contact with the inner circumferential surface of the nozzle 11 to prevent scratching of the inner circumferential surface of the nozzle 11.

Furthermore, as shown in Figures 11 and 12, in some embodiments, the first portion 2201 of the third base body 220 is provided with a plurality of balls 223. These balls 223 are configured to be in rolling contact with the inner circumferential surface of the nozzle 11, preventing the third base body 220 from scraping against the inner circumferential surface of the nozzle 11 or the inner circumferential surface of the shell 10, thereby avoiding damage to the inner circumferential surface of the nozzle 11 or the inner circumferential surface of the shell 10.

At least one of the first base body 30, the second base body 210, and the third base body 220 may be made of a buoyant material. For example, the buoyant material may comprise foam material, glass microsphere foam material, etc.

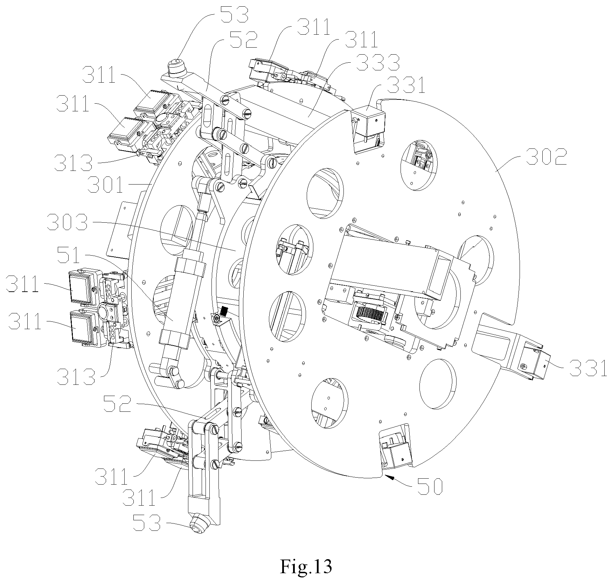

As shown in Figure 13, in some embodiments, the ultrasonic scanning unit further comprises a fifth air cylinder 51 and a second transmission mechanism 52 both arranged on the third base plate. The second transmission mechanism 52 is connected between the fifth air cylinder 51 and a second support member 53. The fifth air cylinder 51 is drivingly connected to the second support member 53 via the second transmission mechanism 52. The second support member 53 can reciprocate between a fifth extended position and a fifth retracted position under the drive of the fifth air cylinder 51. The second support member 53 is closer to the third base plate 303 when in the fifth retracted position compared to when in the fifth extended position. The second support member 53 abuts against the inner circumferential surface of the nozzle 11 when in the fifth extended position. Specifically, the second transmission mechanism 52 may be a linkage mechanism. In other embodiments, the second transmission mechanism 52 may also be omitted, with the output end of the fifth air cylinder 51 directly drivingly connected to the second support member 53. The second support member 53 may be an elastic member or a ball capable of being in rolling contact with the inner circumferential surface of the nozzle 11 to prevent scratching of the inner circumferential surface of the nozzle 11.

As shown in Figures 3, 9, and 10, in some embodiments, the first positioning assembly 21 further comprises a thrust stop trigger 216. The thrust stop trigger 216 is connected to an end of the support arm 213 away from the second base body 210 and located on one side of the underwater suction cup 214. Specifically, as shown in the embodiment of Figures 3, 9, and 10, three support arms 213 are provided in total. Each support arm 213 is provided with two underwater suction cups 214. The thrust stop trigger 216 is located between the two underwater suction cups 214. A control system is provided on land, communicatively connected to the thrust stop trigger 216, the first drive motor 34, the second drive motor 211, the first air cylinder 312, the second air cylinder 322, the third air cylinder 332, the fourth air cylinder 2211, and the fifth air cylinder 51, for controlling these components. As the overall ultrasonic scanning device for a reactor pressure vessel moves, the support arms 213 gradually approach the interior of the shell 10 and stop near the opening of the nozzle 11. The underwater suction cups 214 gradually approach and conform to the inner circumferential surface of the shell 10. When the thrust stop trigger 216 contacts the inner circumferential surface of the shell 10, it generates a feedback signal. The control system receives this feedback signal and controls the fourth air cylinder 2211 to actuate, moving the first support member 222 to the fourth extended position (abutting against the inner circumferential surface of the nozzle 11). Simultaneously, it can also control the fifth air cylinder 51 to actuate, moving the second support member 53 to the fifth extended position (abutting against the inner circumferential surface of the nozzle 11).

As shown in Figures 2, 9, and 10, in some embodiments, the ultrasonic scanning device for a reactor pressure vessel further comprises a calibration block 40. The calibration block 40 is arranged on the first positioning assembly 21. This calibration block 40 is used to calibrate and verify the performance of the first ultrasonic probe 311, the second ultrasonic probe 321, and the third ultrasonic probe 331. Taking the calibration of the first ultrasonic probe 311 as an example, the calibration process is: S1, activating the first drive motor 34 to move the ultrasonic scanning unit 3 along the guide rail 20 towards the first positioning assembly 21 to a position above the calibration block 40; S2, activating the first air cylinder 312 to drive the first ultrasonic probe 311 to extend away from the first base plate 301, bringing the first ultrasonic probe 311 into contact with the calibration block 40; S3, activating the second drive motor 211 to drive the guide rail 20 and the ultrasonic scanning unit 3 on it to rotate circumferentially, thereby causing the first ultrasonic probe 311 to rotate circumferentially; activating the first drive motor 34 to move the ultrasonic scanning unit 3 back and forth axially along the guide rail 20, thereby causing the first ultrasonic probe 311 to move axially back and forth. Through the circumferential rotation and axial movement of the ultrasonic scanning unit 3, the relative position between the first ultrasonic probe 311 and the calibration block 40 can be changed. The first ultrasonic probe 311 emits ultrasonic waves at different positions on the calibration block 40 and receives the reflected ultrasonic signals. These reflected signals are used to calibrate the performance of the first ultrasonic probe 311. The above calibration process applies similarly when replacing the first ultrasonic probe 311 with the second ultrasonic probe 321 or the third ultrasonic probe 331. Since the calibration block 40 is arranged on the first positioning assembly 21, the calibration of the ultrasonic probes of all three scanning assemblies can be performed underwater. The ultrasonic scanning device for reactor pressure vessel does not need to be brought ashore for calibration, saving calibration time and improving work efficiency.

The material of the calibration block 40 is the same as that of the shell 10 or the nozzle 11. The calibration block 40 may have a tile-like shape, that is, it may have a curved surface to simulate the shape of the inner circumferential surface of the shell 10 or the nozzle 11. Of course, the calibration block 40 may also be a block with a regular, square-like structure.

Understandably, the above embodiments only represent preferred implementation modes of the present invention. Their descriptions are relatively specific and detailed but should not be construed as limiting the scope of the patent of the present invention. It should be pointed out that for those skilled in the art, without departing from the concept of the present invention, various modifications and improvements can be made to the above technical features, and these all belong to the protection scope of the present invention. Therefore, any equivalent transformations and modifications made within the scope of the claims of the present invention shall fall within the coverage of the claims of the present invention.

## Claims

1. an ultrasonic scanning device for reactor pressure vessel, **characterized by** comprising:
a positioning unit and an ultrasonic scanning unit (3);
wherein the positioning unit comprises a guide rail (20) configured to extend at least partially into the interior of a nozzle (11) of a reactor pressure vessel;
wherein the ultrasonic scanning unit (3) comprises a first base body (30), first ultrasonic scanning assembly (31) for scanning a nozzle safe-end welded seam (121), second ultrasonic scanning assembly (32) for scanning a nozzle-to-shell connecting welded seam (122), and third ultrasonic scanning assembly (33) for scanning an inner radius region (123); the first ultrasonic scanning assembly (31), the second ultrasonic scanning assembly (32), and the third ultrasonic scanning assembly (33) are respectively disposed on the first base body (30);
wherein the first base body (30) is connected to the guide rail (20) and is movable back and forth relative to the guide rail (20) along an extending direction of the guide rail (20); and the guide rail (20) is rotatable about a central axis along its extending direction.

2. The ultrasonic scanning device for reactor pressure vessel according to claim 1, **characterized in that** the first base body (30) comprises a first base plate (301) and a second base plate (302) spaced apart from each other, and a third base plate (303) connected between the first base plate (301) and the second base plate (302), the third base plate (303) encloses to form a hollow first cavity (304), the first cavity (304) penetrates through the first base plate (301) and the second base plate (302), and the guide rail (20) passes through the first cavity (304);
wherein the first ultrasonic scanning assembly (31) comprises a first bracket and a first ultrasonic probe (311) connected to the first bracket, the first bracket being connected to the first base plate (301); the second ultrasonic scanning assembly (32) comprises a second bracket and a second ultrasonic probe (321) connected to the second bracket, the second bracket being connected to the third base plate (303); and the third ultrasonic scanning assembly (33) comprises a third bracket and a third ultrasonic probe (331) connected to the third bracket, the third bracket being connected to the first base plate (301) and the second base plate (302), respectively.

3. The ultrasonic scanning device for reactor pressure vessel according to claim 2, **characterized in that** the first bracket comprises a first air cylinder (312) connected to the first base plate (301), the first air cylinder (312) being drivingly connected to the first ultrasonic probe (311), the first ultrasonic probe (311) is movable back and forth between a first extended position and a first retracted position under the drive of the first air cylinder (312), the first ultrasonic probe (311) is closer to the first base plate (301) when in the first retracted position than when in the first extended position; and/or
the second bracket comprises a second air cylinder (322) connected to the third base plate (303), the second air cylinder (322) being drivingly connected to the second ultrasonic probe (321), the second ultrasonic probe (321) is movable back and forth between a second extended position and a second retracted position under the drive of the second air cylinder (322), the second ultrasonic probe (321) is closer to the third base plate (303) when in the second retracted position than when in the second extended position; and/or
the third bracket comprises a third air cylinder (332), a support rod (333), a rotating shaft (334), and a rotating shaft seat (335); a fixed end of the third air cylinder (332) is connected to the second base plate (302), an output end of the third air cylinder (332) is connected to a first end of the support rod (333), a second end of the support rod (333) is connected to the third ultrasonic probe (331), the rotating shaft seat (335) is connected to the first base plate (301), the rotating shaft (334) is connected to the rotating shaft seat (335), and the rotating shaft (334) is rotatably connected to a position between the first end and the second end of the support rod (333).

4. The ultrasonic scanning device for reactor pressure vessel according to claim 2, **characterized in that** the ultrasonic scanning unit (3) further comprises a first drive motor (34) disposed on the third base plate (303), and a gear (35) drivingly connected to an output shaft of the first drive motor (34);
wherein the guide rail (20) is provided with a gear rack extending along the extending direction of the guide rail (20), and the gear (35) meshes with the gear rack.

5. The ultrasonic scanning device for reactor pressure vessel according to claim 1, **characterized in that** the positioning unit further comprises a first positioning assembly (21) for positioning on an inner circumferential surface of a shell (10) of the reactor pressure vessel and a second positioning assembly (22) for positioning on an inner circumferential surface of the nozzle (11), the first positioning assembly (21) and the second positioning assembly (22) are respectively connected to two ends of the guide rail (20).

6. The ultrasonic scanning device for reactor pressure vessel according to claim 5, **characterized in that** the ultrasonic scanning device for reactor pressure vessel further comprises a calibration block (40), and the calibration block (40) is disposed on the first positioning assembly (21).

7. The ultrasonic scanning device for reactor pressure vessel according to claim 5, **characterized in that** the first positioning assembly (21) comprises a second base body (210) and a second drive motor (211), the second drive motor (211) is disposed within an enclosed second cavity (212) formed by the second base body (210), and an output shaft of the second drive motor (211) is drivingly connected to the guide rail (20).

8. The ultrasonic scanning device for reactor pressure vessel according to claim 7, **characterized in that** the first positioning assembly (21) further comprises support arms (213) and underwater suction cups (214) for adsorbing to the inner circumferential surface of the shell (10), the support arms (213) is connected to the second base body (210), and the underwater suction cups (214) is connected to an end of the support arms (213) away from the second base body (210); and/or the first positioning assembly (21) further comprises an underwater thruster (215) connected to the second base body (210).

9. The ultrasonic scanning device for reactor pressure vessel according to claim 8, **characterized in that** the first positioning assembly (21) further comprises a thrust stop trigger (216), the thrust stop trigger (216) is connected to the end of the support arm (213) away from the second base body (210) and is located at one side of the underwater suction cup (214).

10. The ultrasonic scanning device for reactor pressure vessel according to claim 5, **characterized in that** the second positioning assembly (22) comprises a third base body (220), a drive mechanism (221), and a support member (222), the third base body (220) is connected to a second end of the guide rail (20), and the drive mechanism (221) is disposed on the third base body (220);
wherein the drive mechanism (221) is drivingly connected to the support member (222) to drive the support member (222) to move back and forth between a fourth extended position and a fourth retracted position, the support member (222) is closer to the third base body (220) when in the fourth retracted position than when in the fourth extended position, and the support member (222) abuts against the inner circumferential surface of the nozzle (11) when in the fourth extended position.

11. The ultrasonic scanning device for reactor pressure vessel according to claim 10, **characterized in that** the third base body (220) is provided with a plurality of balls (223), and the balls (223) are configured to be in rolling contact with the inner circumferential surface of the nozzle (11).
